# EUROPEAN PATENT APPLICATION

(11) **EP 1 039 328 A1**
(43) Date of publication of application: **27.09.2000**
(21) Application number: 00830207.7
(22) Date of filing: 21.03.2000
(51) Int. Cl.: G02C 1/06

(54) **Metal wire mounting with lens hoops and system for attachment of the hoop wire to the hinges of the arms**

(30) Priority: 22.03.1999 IT FI990032 U; 22.03.1999 IT FI990031 U
(71) Applicant: BOTTEGA D'ARTE IN FIRENZE S.R.L., 50126 Firenze (IT)
(72) Inventor: Fortini, Fabio, 50141 Firenze (IT)
(74) Representative: Mannucci, Michele

(57) **Abstract**

The mounting comprises: a front part (1) with means for holding a pair of lenses which comprises a first wire (3) forming a hoop portion for the two lenses (L) and an intermediate bridge (3P) and, for each lens, a second wire (5) completing the hoop. Each of said second wires has a first hook-shaped end (5A) which engages the axial cavity of the corresponding hinge connecting to arm (13).

## Description

This invention relates to a wire mounting, in particular of metal wire, for spectacles.

More particularly the invention relates to an improvement in a mounting of the type comprising a front part with means for holding a pair of lenses, and a pair of arms hinged to the front part through corresponding hinges. The hinges are constructed in the form of two sets of helicoidal coils which are inserted one within the other. A mounting of this type is described for example in Italian utility model application no. FI/94U/77.

The object of this invention is the provision of a mounting of the abovementioned type which is more convenient in use and more simple to assemble.

This and other purposes and advantages which will be clear to those skilled in the art from a reading of the following text are achieved with a mounting having the features in claim no. 1.

Further advantageous features of improved embodiments of the invention are indicated in the dependent claims.

The drawing illustrates a possible embodiment of the invention and in particular:
Figure 1 shows a front view of a pair of spectacles comprising a mounting in a first embodiment according to the invention,
Figure 2 shows a front view of a pair of spectacles with a mounting in a second embodiment in accordance with the invention,
Figure 3 shows a side view of an arm separately from the remainder of the mounting,
Figure 4 shows a view from above along the line IV-IV in Figure 3,
Figure 5 shows a view from above similar to the view in Figure 4, with the series of turns formed by the arm and the series of turns formed by the wire of the front part of the mounting assembled one within the other to complete the connecting hinge between the arm and the front part of the mounting,
Figure 6 shows a side view along VI-VI in Figure 1,
Figure 7 shows a perspective view of the first wire of the front part of the mounting and one of the second wires of said front part during assembly, and
Figure 8 shows a side view along VIII-VIII in Figure 7.

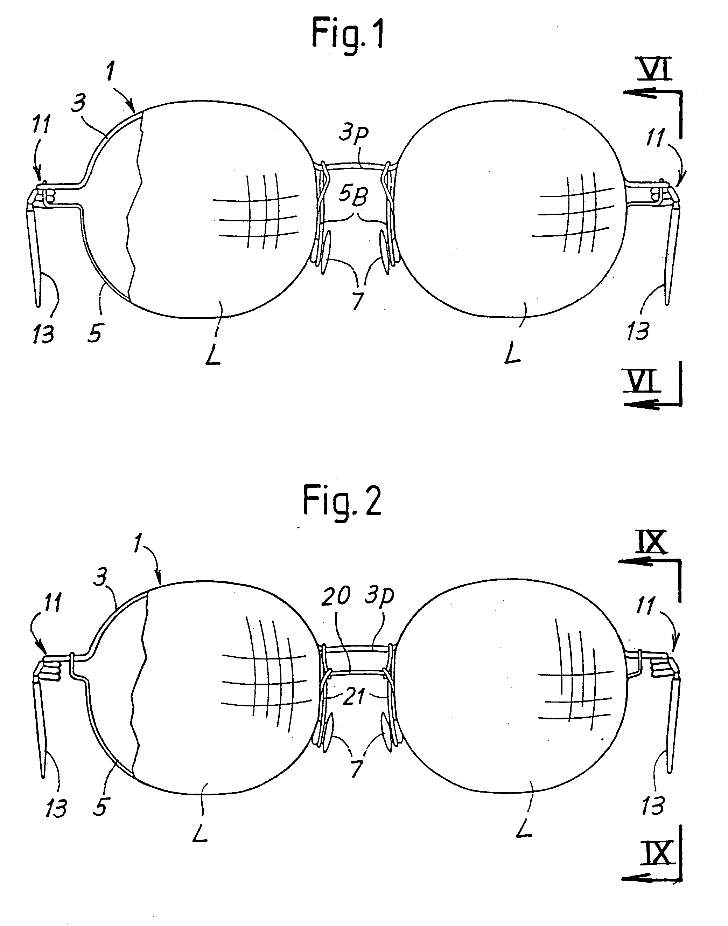

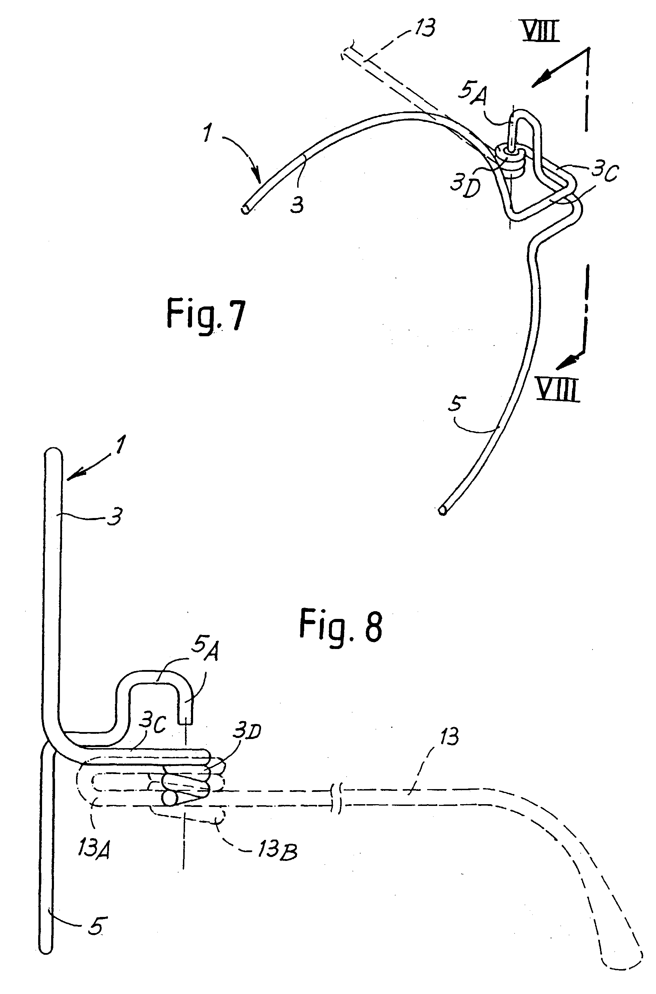

A first embodiment of the invention will be described initially with reference to Figures 1 and 3-8. Figure 1 shows a complete pair of glasses with two lenses L inserted in corresponding hoops in a front part 1 of the mounting. The latter is formed of a first metal wire 3 of greater diameter which extends along approximately the upper half of the edge of each lens L and, for each lens L, a corresponding second metal wire 5 which in the example illustrated has a smaller cross-section than metal wire 1.

In an intermediate portion metal wire 1 forms a bridge 3P which joins the two lenses L. Each wire 5 extends to a first hook-shaped end indicated by 5A which engages upper wire 3 in a manner which will be described below. The second end of each wire 5 forms an extension 5B with a terminal eye in which corresponding pads 7 which support the mounting on the nose are engaged. Extensions 5B also form a corresponding attachment to intermediate portion 3P of upper wire 3 by engaging the latter.

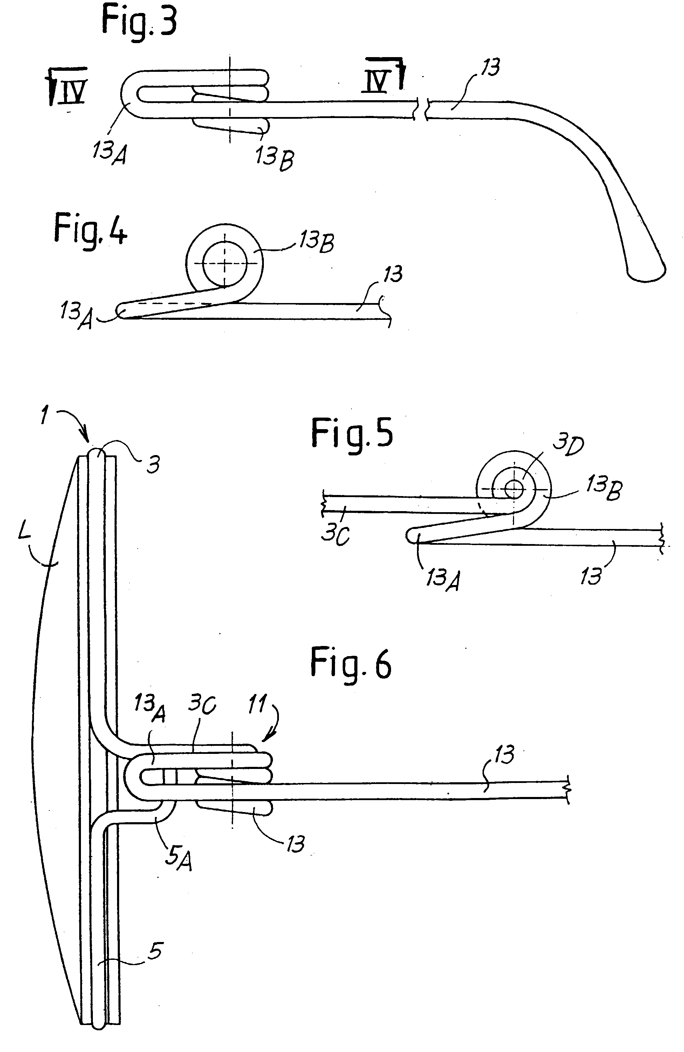

Two arms 13, one of which is shown separately in Figures 3 and 4, are connected to front part 1 of the mounting through hinges 11. Each arm 13 comprises a metal wire which forms a loop 13A and a series of helicoidal turns 13B forming a first portion of corresponding hinge 11.

First wire 3 forming front part 1 of the mounting extends on the two sides of the front part forming two connecting members 3C which in turn end in a second set of helicoidal turns 3D, the outer diameter of which is less than the internal diameter of helicoidal turns 13B formed by the wire of arm 13. In this way the second set of helicoidal turns 3D can be screwed into the first set of helicoidal turns 13B, as shown in the plan view in Figure 5. The two sets of helicoidal coils inserted one into the other together form hinge 11.

The first hook-shaped end 5A of each second wire is inserted axially into the seat formed by the set of turns 3D of smaller diameter formed by wire 3.

As can be seen in particular in Figures 5 and 6, loop 13A forms a stop against connecting member 3C which restricts the maximum opening of arm 13 with respect to front part 1 of the mounting.

Figure 2 shows a front view of a pair of spectacles with a slightly modified mounting. The significant difference in comparison with the mounting illustrated in Figure 1 lies in the fact that a stirrup 20 which extends with two arms 21 bearing pads 7 which support the mounting on the nose is provided in bridge 3P formed by wire 3. Arms 21 in effect replace extensions 5B with which wires 5 were provided in the embodiment illustrated in Figure 1. The inside ends (that is those corresponding to bridge 3P) of the two wires 5 are attached to stirrup 20 instead of wire 3.

The features of the hinges 11 could be used also with a different shape of the front portion of the mounting or frame. Essentially, the mounting or frame could comprise: a front part with means for holding a pair of lenses, and a pair of arms hinged to said front part through corresponding hinges, each of said hinges being formed from a first set of turns or coils wound helicoidally formed by a first portion of wire of said arm and a second set of helicoidal turns or coils formed by a second portion of wire of said front part of the mounting, said first and said second sets of helicoidal coils being inserted one within the other; wherein the first set of helicoidal turns has a diameter which is larger than the diameter of the second set and is screwed around said second set of turns, and wherein the wire forming the arm has a loop which forms a stop defining a position of maximum aperture of the arm with respect to the front part of the frame or mounting.

## Claims

1. A wire mounting for spectacles comprising:
- a front part with means for holding a pair of lenses which comprises a first wire forming a hoop portion for the two lenses and an intermediate bridge and, for each lens, a second wire completing the hoop,
- and a pair of arms hinged to said front part through corresponding hinges, each of said hinges having an axial cavity,
characterized in that
each of said second wires has a first hook-shaped end which is inserted into the axial cavity of the corresponding hinge.

2. Mounting according to claim 1, characterized in that each of said hinges is formed from a first set of turns wound helicoidally formed by a first portion of wire of said arm and a second set of helicoidal turns formed by a second portion of wire of said front part of the mounting, said first and said second sets of helicoidal turns being inserted one within the other and the inner one of said sets of turns forming said axial cavity.

3. Mounting according to claims 1 or 2, characterized in that said first wire extends on the two sides of the front part of the mounting forming two connecting members terminating with the corresponding second sets of turns forming the hinges.

4. Mounting according to one or more of claims 1 to 3, characterized in that each of said second wires has a second hook-shaped end which engages the first wire at said bridge.

5. Mounting according to one or more of claims 1 to 3, characterized in that each of said second wires has a second hook-shaped end which engages a stirrup attached to said first wire at said bridge and bearing a pair of pads to support the mounting on the wearer's nose.

6. Mounting according to one or more of the foregoing claims, characterized in that said wire forms the upper portion of the hoop for each lens and each of said second wires forms the lower portion of the hoop for each lens.
